# EUROPEAN PATENT SPECIFICATION

(11) **EP 2 247 134 B1**
(45) Date of publication and mention of the grant of the patent: **23.11.2011**
(21) Application number: 10176197.1
(22) Date of filing: 11.01.2008
(51) Int. Cl.: H04W 24/00

(54) **Wireless stations for measuring interference**
Drahtlose Stationen zur Interferenzmessung
Stations sans fil pour mesurer d'interférence

(30) Priority: 12.01.2007 US 884775 P
(43) Date of publication of application: 03.11.2010
(62) Divisional of application: 08724477.8
(73) Proprietor: INTERDIGITAL TECHNOLOGY CORPORATION, Wilmington, DE 19810 (US)
(72) Inventor: Grandhi, Sudheer, Pleasanton, CA 94588 (US); Zuniga, Juan Carlos, Montreal Québec H4L 3J4 (CA); Levy, Joseph, S., Merrick, NY 11566 (US); Kwak, Joseph, A., Bolingbrook, IL 60440 (US)
(74) Representative: Engdahl, Stefan

(56) References cited:
- EP-A- 1 667 373
- WO-A-02/19743

## Description

BACKGROUND

The carrier sense multiple access with collision avoidance (CSMA/CA) protocol for IEEE 802.xx communications requires each wireless station (STA) to determine that a channel is idle prior to transmitting. The physical (PHY) and medium access control (MAC) layers are tasked with sensing a channel prior to transmitting any frames. This is done using carrier sense mechanisms. Carrier sense mechanisms indicate whether a channel is busy when frames are detected on the channel or when radio-frequency (RF) power on the channel exceeds a certain threshold.

RF channel power detection is used to detect carriers from other users of the unlicensed channels which are not compatible with IEEE 802 standards. These carriers are considered interference for the STA. By detecting a carrier, the STA determines that the channel is busy and delays transmission. As a result, any source of RF interference power transmitted on an idle channel will prevent normal use of the channel and may have a negative impact on channel efficiency since the "busy" channel actually carries no data. If the source of RF interference power transmits during a busy channel, the signal to noise (S/N) ratio of the received frames changes, and frame errors and frame retransmissions are more likely. If the RF interference level falls below the STA's threshold for carrier sense the STA may transmit, however the RF interference may increase idle channel noise causing increased frame errors and frame retransmissions.

In IEEE 802 wireless networks, STAs are equipped to measure power within a wireless channel during idle periods. This idle channel measured power is the sum of thermal noise, interference from other STAs, and interference from non-wireless devices such as microwave ovens, other unlicensed industrial, scientific and medical (ISM) band users such as wireless phones, and other nearby sources of wideband radio-frequency interference (RFI) such as electric motors. Measurements of idle channel power include interference power from various interference sources, but do not provide an estimate of the magnitude of the interference sources because there is no base line for a channel without any interference.

Without a means to measure interference, the STA is unable to alert an access point (AP) or other network entities of changes, increases or decreases, in the perceived interference levels. Without such interference feedback from the STAs, the network is unable to make reasoned decisions for STA load balancing among APs, network frequency plans, and individual basic service set (BSS) channel selection. Furthermore, idle STAs are unable to autonomously alert an AP when local interference increases, causing increased delays for quality of service (QOS) service initiation as the AP tries, and retries, lower data rates until a sufficient QOS is established.

Direct measurement of interference requires control of the interference sources. Typically measurements of service quality or idle channel power are made with the sources of interference turned on, and then identical measurements are made with the sources of interference turned off. A quantified interference level may then be calculated from the differences in these direct measurements.

In a typical IEEE 802 wireless system, the STAs and APs are generally unable to control the sources of interference. Therefore, such a direct interference measurement is not possible.

Accordingly, a practical technique to indirectly measure or estimate interference in IEEE 802 systems is needed. Since STAs are unable to directly measure or estimate RF interference in the local environment, the capability to measure, or estimate, RF interference in a standardized manner would also be useful.
EP 1 667 373 discloses a protocol by which wireless network communication devices cooperatively exchange information about radio frequency interference detected in the network. The interference information collected through the cooperative protocol may then be used by devices in the network to adapt to mitigate interference related problems.

SUMMARY

Metrics for estimating RF interference may be derived from measurements of idle channel noise, channel utilization, medium access delay, STA throughput, BSS throughput and frame error rate. Further, metrics may be derived from the prior list of directly measured items in combination, as ratios and by rate of change analysis. RF interference is measured indirectly by measuring total idle channel power or by measuring changes in communication channel efficiency and frame errors.

RF interference measurements may also be based on various combinations of other direct measurements such as average noise power indicator (ANPI), STA data throughput, AP data throughput, STA medium access delay, node medium access delay, STA channel utilization, BSS channel utilization, and frame retransmission count. The detailed descriptions below describe the specific metrics for various useful combinations of these direct measurements, but other combinations are also possible.

BRIEF DESCRIPTION OF THE DRAWINGS

Figure 1 is a block diagram of a typical wireless system;

Figure 2 is a flow chart of a method for determining RF interference based on ANPI;

Figure 3 is a flow chart of another method for determining RF interference based on channel utilization;

Figure 4 is a flow chart of another method for determining RF interference based on medium access delay; -

Figure 5 is a flow chart of another method for determining RF interference based on fragment error, and

Figure 6 is a flow chart of another method for determining RF interference based on throughput;

DETAILED DESCRIPTION

When referred to hereafter, the terminology "wireless transmit/receive unit (WTRU)" includes but is not limited to a user equipment (UE), a wireless station (STA), a fixed or mobile subscriber unit, a pager, a cellular telephone, a personal digital assistant (PDA), a computer, or any other type of user device capable of operating in a wireless environment. When referred to hereafter, the terminology "base station" includes but is not limited to a Node-B, a site controller, an access point (AP), or any other type of interfacing device capable of operating in a wireless environment.

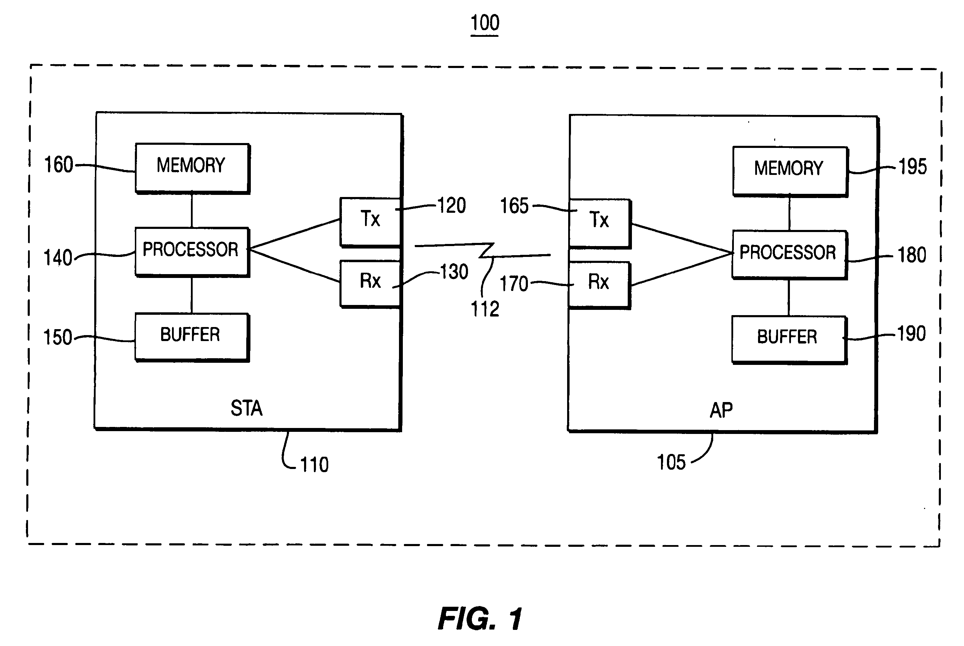

Figure 1 is a block diagram of a wireless communication system 100 configured to determine interference levels. The system includes an AP 105 and a wireless STA 110. The AP 105 and the STA 110 communicate via a wireless communication link, 112.

As shown in Figure 1, the STA 110 includes a transmitter 120, a receiver 130 and a processor 140. The processor 140 is attached to a buffer 150 and a memory 160. The processor 140 is configured to determine, or estimate RF interference using at least one technique described below.

Also shown in Figure 1, the AP 105 includes a transmitter 165, a receiver 170 and a processor 180. The processor 180 is attached to a buffer 190 and a memory 195. The processor 180 is configured to determine, or estimate, RF interference using at least one technique described below.

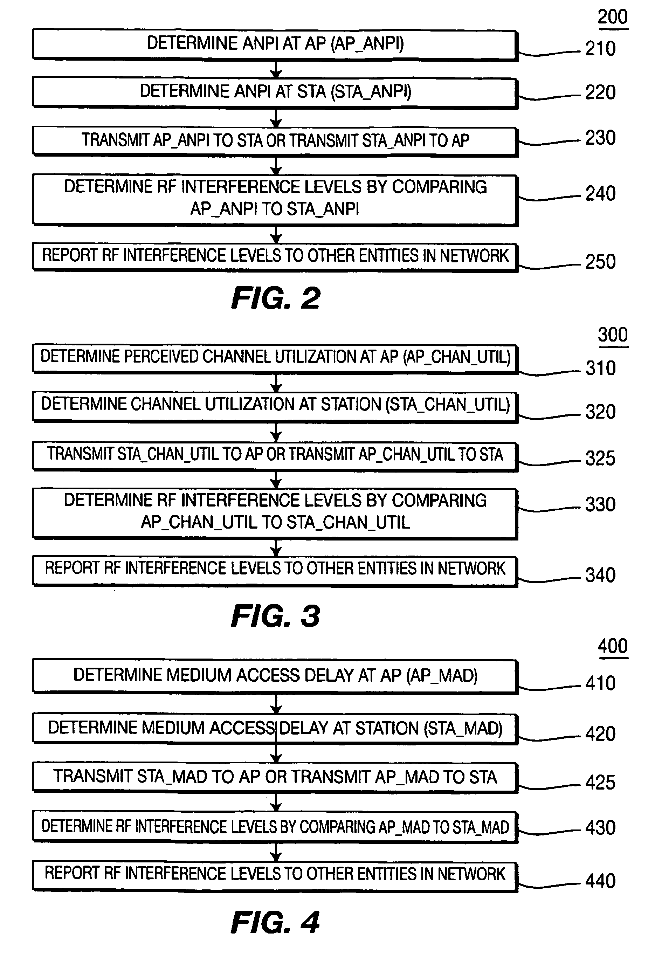

Figure 2 shows a flow diagram of a method 200 determining RF interference according to a first embodiment. First, the AP's average noise power indicator (AP_ANPI) is determined by constantly measuring the AP's perceived idle channel noise power and averaging it over a period of time (210). Then the STA's ANPI (STA_ANPI) is determined at the station (220). The AP then transmits the AP_ANPI to the STA, or the STA transmits the STA_ANPI to the AP (230). Then, the STA determines the presence of interference by comparing the STA_ANPI to the AP_ANPI (240).

When the STA measures a higher ANPI than the AP, it indicates that the STA is experiencing more RF interference than the AP and that RF interference power is equal to STA_ANPI minus AP_ANPI. When the STA measures a lower ANPI than the AP, it indicates the AP is experiencing more RF interference than the STA and that RF interference power is equal to AP_ANPI minus STA_ANPI. The ratio of these two ANPI measurements is equal to one when there is no RF interference at either the STA or the AP, or when the RF interference is the same at the STA and at the AP. Thus, the ratio of these two ANPI measurements may be used to indicate RF interference. A ratio > 1 indicates local RF interference at the STA, a ratio <1 indicates local RF interference at the AP. It should be noted that this metric is useful for low levels of RF interference only. Higher levels of RF interference which trigger the carrier sense mechanism will not be detectable using this metric. Optionally, the detection of RF interference onset, or termination of RF interference, may be reported to at least one other network entity, at 250.

In an alternative embodiment, not pictured, a STA may measure interference by monitoring the rate of change of the STA_ANPI. A sudden increase in the ANPI value indicates the onset of a new RF interference source at that STA. The STA software may store ANPI values in the buffer and compare older ANPI values to the most recent ANPI value and subtract the difference. If the difference is greater (increasing ANPI) than a selected threshold value (in dB) for a selected time window (measurement time for recent measurement less measurement time for older measurement), RF interference onset is detected at that STA. If the difference is less (decreasing ANPI) than a selected threshold value (in -dB) for a selected time window (measurement time for recent measurement less measurement time for older measurement), RF interference termination is detected at that STA. The detection of RF interference onset or termination may be reported by the STA to the AP or other network entity.

Figure 3 shows a flow diagram of a method 300 determining RF interference according to another embodiment. First, the AP's perceived channel utilization (AP_Cha_Util) is determined (310). The AP's channel utilization measurement serves as a baseline channel metric for the AP describing the percentage of time the channel is busy. Next, the STA's channel utilization (STA_Chan_Util) is determined (320). The AP then transmits the AP_Chan_Util to the STA, or the STA transmits the STA_Chan_Util to the AP (325). Finally, the presence of interference is determined by comparing the STA_Chan_Util to the AP_Chan_Util (330).

If a STA measures a different STA_Chan_Util in the STA's local environment, this may indicate the presence or absence of RF interference as compared to the AP's environment. When the STA measures higher channel utilization than the AP, it indicates the STA's carrier sense mechanism is detecting more RF interference power than the AP or that the STA is in radio range of other wireless transmissions which are not detectable by the AP. When the STA measures lower channel utilization than the AP, it may indicate that the AP is experiencing more RF interference than the STA or that the STA is not in radio range of certain other STAs which are transmitting to the AP. The ratio of these two channel utilization measurements is equal to one when there is no RF interference at either the STA or the AP, or when the RF interference is the same at the STA and at the AP. Thus, the ratio of these two ANPI measurements may be used to indicate RF interference. A ratio > 1 indicates more local RF interference at the STA, and a ratio <1 indicates more local RF interference at the AP. It should be noted that this metric is useful for high levels of RF interference which trigger the STA carrier sense mechanisms. Optionally, the detection of RF interference onset, or termination of RF interference, may be reported to at least one other network entity, at 340.

Figure 4 shows a flow diagram of a method 400 determining RF interference according to another embodiment. First, the AP's medium access delay (AP_MAD) is determined (410). The AP's medium access delay serves as a baseline channel metric for the AP describing the average medium access delay for all downlink traffic in the basic service set. Next, the STA's MAD (STA_MAD) is determined (420). The STA_MAD is a measure of the MAD for STA's uplink. The AP then transmits the AP_MAD to the STA, or the STA transmits the STA_MAD to the AP (425). Finally, the presence of interference is determined by comparing the STA_MAD and the AP_MAD (430).

If a STA measures a different medium access delay (STA_MAD) in the STA's local environment for its uplink traffic, this may indicate the presence or absence of RF interference as compared to the BSS. When the STA measures a higher MAD than the AP, it indicates the STA's carrier sense mechanism is detecting more RF interference power than the AP or that the STA is in radio range of other wireless transmissions which are not detectable by the AP. When the STA measures a lower MAD than the BSS, it may indicate that the AP is experiencing more RF interference than the STA or that the STA is not in radio range of certain other STAs which are transmitting to the AP. The ratio of these two channel MAD measurements is equal to 1 when there is no RF interference at either the STA or the AP, or when the RF interference is the same at the STA and at the AP. Thus, the ratio of these two MAD measurements may be used to indicate RF interference. A ratio > 1 indicates more local RF interference at the STA, a ratio <1 indicates more local RF interference at the AP. It should be noted that this method is useful for high levels of RF interference which trigger the STA carrier sense mechanisms. Optionally, the detection of RF interference onset, or termination of RF interference, may be reported to at least one other network entity, at 440.

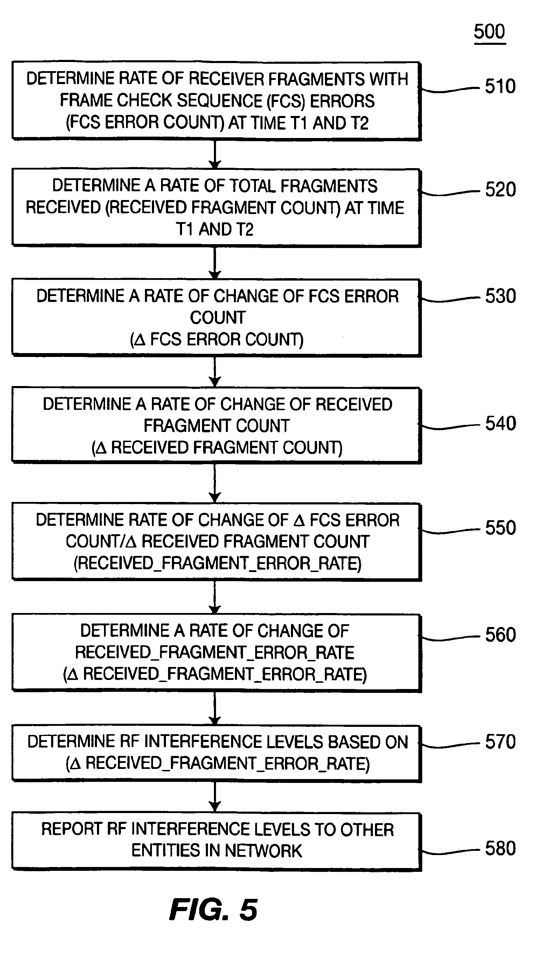

Figure 5 shows a flow diagram of a method (500) determining RF interference according to another embodiment. First a processor within the STA or AP determines a rate of received fragments with fragment count system (FCS) errors (FCSErrorCount) (510). At the same time, the processor determines a rate of total fragments received (ReceivedFragmentCount) (520). Then the processor determines the rate of change of the FCSErrorCount (ΔFCSErrorCount) (530). At the same time, the processor, also determines a rate of change of the ReceivedFragmentCount (ΔReceivedFragmentCount) (540). Next, the processor determines the ratio of ΔFCSErrorCount to ΔReceivedFragmentCount (550). The ratio of these deltas represents the received fragment error rate. Then the processor determines a rate of change of the ratio of ΔFCSErrorCount to ΔReceivedFragmentCount (Δ[ΔFCSErrorCount /ΔReceivedFragmentCount]) (560). Finally, the processor determines the RF interference levels based on the Δ[AFCSErrorCount/ AReceivedFragmentCount] (570).

A sudden increase in the received Δ[ΔFCSErrorCount/ΔReceivedFragmentCount] indicates the onset of a new RF interference at that STA or AP. If the difference in Δ[ΔFCSErrorCount/ΔReceivedFragmentCount] is greater (increasing received fragment error rate) than a selected threshold value (in dB) for a selected time window, then RF interference onset is detected at that STA or AP. If the difference in the Δ[ΔFCSErrorCount/ΔReceivedFragmentCount] is less (decreasing received fragment error rate) than a selected threshold value (in -dB) for a selected time window (measurement time for recent received fragment error rate less- measurement time for the older received fragment error rate), RF interference termination is detected at that STA. Optionally, the detection ofRF interference onset, or termination ofRF interference, may be reported to at least one other network entity, at 580.

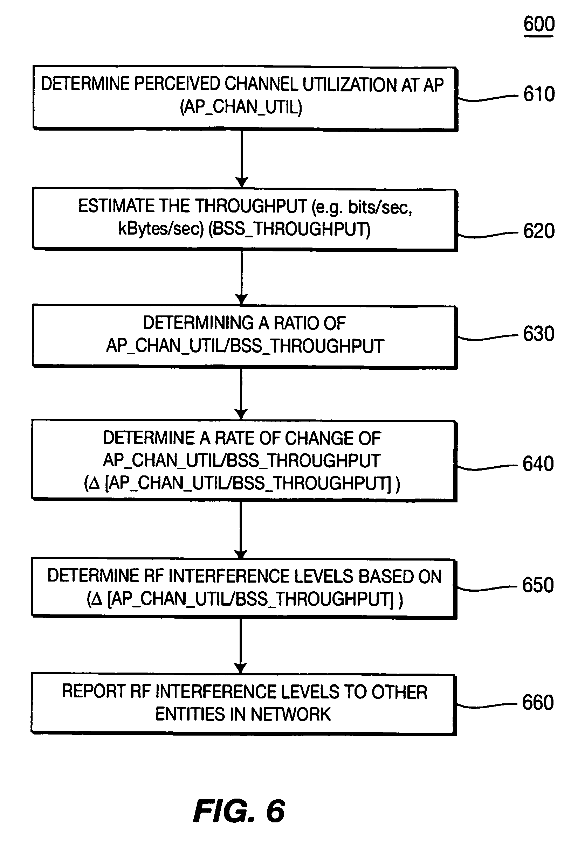

Figure 6 shows a flow diagram of a method for determining RF interference by measuring the rate of change of a BSS channel overhead performance metric. A high value for channel utilization divided by BSS throughput indicates high channel overhead and inefficient BSS operation. Therefore, the AP's channel utilization (AP_Chan_Util) is determined, at 610. Then the AP determines a BSS Throughput (BSS_Throughput) by determining a total number of fragments transmitted and received in over a predetermined period of time, at 620. Next the AP determines the ratio of the AP_Chan_Util to BSS_Throughput (AP_Chan_Util/BSS_Throughput), at 630. Then the AP determines a rate of change of the AP_Chan_Util/BSS_Throughput, (Δ [AP_Chan_Util_BSS_Throughput]) at 640. Finally, the AP determines RF interference based on the Δ[AP_Chan_Util/BSS_Throughput], at 650. A sudden increase in the AP_Chan_Util/BSS_Throughput, or BSS channel overhead, indicates the onset of a new RF interference at that AP.

Alternatively, instead of monitoring the rate of change the AP may compare the AP_Chan_Util/BSS_Throughput to a predetermined threshold value. If the difference in the BSS channel overhead is greater (increasing BSS channel overhead) than a selected threshold value (in dB) for a selected time period, then RF interference onset is detected at that AP. If the difference in the BSS channel overhead is less than the predetermined threshold for a selected time window, then RF interference termination is detected at that AP. Optionally, the RF interference may be reported by the AP to the STAs in the BSS or to some other network entity, at 660.

It should be noted that with any of the methods described above certain measurements may need to be transmitted to the STAs in the BSS. For example, the metrics which may need to be transmitted to the STAs include AP_ANPI, AP_Chan_Util, and AP_MAD.

Although the features and elements of the present embodiments are described in particular combinations, each feature or element can be used alone without the other features and elements of the other embodiments or in various combinations with or without other features and elements of the present embodiments. The methods or flow charts provided herewith may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU or STA may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A wireless station, STA, comprising:
a receiver configured to receive an average noise power indicator, AP_ANPI, measurement from an access point, AP, wherein the AP_ANPI is determined by measuring an idle channel power perceived by the AP and averaging it over time; and
a processor configured to determine an average noise power indicator of the STA, STA_ANPI, by measuring an idle channel power perceived by the STA and averaging it over time,
**characterized in that** the processor is further configured to:
determine radio frequency, RF, interference by comparing the STA_ANPI and the AP_ANPI.

2. The STA of claim 1, wherein the processor is configured to determine that the STA is experiencing higher RF interference than the AP on a condition that the STA_ANPI is greater than the AP_ANPI.

3. The STA of claim 1, wherein the processor is configured to determine that the AP is experiencing higher RF interference than the STA on a condition that the STA_ANPI is less than the AP_ANPI.

4. The STA of claim 1, wherein the processor is configured to determine the RF interference by comparing a ratio of the STA_ANPI to the AP_ANPI.

5. A wireless station, STA, comprising:
a receiver configured to receive a channel utilization metric, AP_CHAN_UTIL, from an access point, AP, wherein AP_CHAN_UTIL is a percentage of time the channel is perceived busy by the AP; and
a processor configured to determine channel utilization of the STA, STA_CHAN_UTIL, which is a percentage of time the channel is perceived busy by the STA,
**characterized in that** the processor is further configured to:
determine radio frequency, RF, interference by comparing the STA_CHAN_UTIL to the AP_CHAN_UTIL.

6. The STA of claim 5, wherein the processor is configured to determine that the STA is experiencing higher RF interference than the AP on a condition that the STA_CHAN_UTIL is greater than the AP_CHAN_UTIL.

7. The STA of claim 5, wherein the processor is configured to determine that the AP is experiencing higher RF interference than the STA on a condition that the STA_CHAN_UTIL is less than the AP_CHAN_UTIL.

8. The STA of claim 5, wherein the processor is configured to determine the RF interference by comparing a ratio of the STA_CHAN_UTIL to the AP_CHAN_UTIL.

9. A wireless station, STA, comprising:
a receiver configured to receive a medium access delay metric, AP_MAD, from an access point, AP, wherein AP_MAD is an average medium access delay for all downlink traffic in a basic service set; and
a processor configured to determine a medium access delay metric of the STA, STA_MAD, which is an average medium access delay for all uplink traffic of the STA,
**characterized in that** the processor is further configured to:
determine radio frequency, RF, interference by comparing the STA_MAD and the AP_MAD.

10. The STA of claim 9, wherein the processor is configured to determine that the STA is experiencing higher RF interference than the AP on a condition that the STA_MAD is greater than the AP_MAD.

11. The STA of claim 9, wherein the processor is configured to determine that the AP is experiencing higher RF interference than the STA on a condition that the STA_MAD is less than the AP_MAD.

12. The STA of claim 9, wherein the processor is configured to determine the RF interference by comparing a ratio of the STA_MAD to the AP_MAD.

## Patentansprüche

1. Drahtlose Station, STA, welche das Folgende umfasst:
einen Empfänger, der dafür konfiguriert ist, eine Messung einer Messgröße für die mittlere Rauschleistung (Average Noise Power Indicator), AP_ANPI, von einem Zugangspunkt (Access Point, AP), zu empfangen, wobei AP_ANPI durch Messen einer von dem AP registrierten Leerkanalleistung und Mittelwertbildung für dieselbe über die Zeit ermittelt wird; und
einen Prozessor, der dafür konfiguriert ist, durch Messen einer von der STA registrierten Leerkanalleistung und Mittelwertbildung für dieselbe über die Zeit eine Messgröße für die mittlere Rauschleistung der STA, STA_ANPI, zu ermitteln,
**dadurch gekennzeichnet, dass** der Prozessor ferner für das Folgende konfiguriert ist:
Ermitteln der Interferenz einer Funkfrequenz, RF, durch Vergleichen von STA_ANPI mit AP_ANPI.

2. STA nach Anspruch 1, wobei der Prozessor dafür konfiguriert ist, zu ermitteln, dass die STA unter der Bedingung, dass STA_ANPI größer als AP_ANPI ist, eine höhere RF-Interferenz als der AP aufweist.

3. STA nach Anspruch 1, wobei der Prozessor dafür konfiguriert ist, zu ermitteln, dass der AP unter der Bedingung, dass AP_ ANPI kleiner als STA_ANPI ist, eine höhere RF-Interferenz als die STA aufweist.

4. STA nach Anspruch 1, wobei der Prozessor konfiguriert ist, die RF-Interferenz durch Vergleichen eines Verhältnisses von STA_ANPI zu AP_ANPI zu ermitteln.

5. Drahtlose Station, STA, welche das Folgende umfasst:
einen Empfänger, der dafür konfiguriert ist, eine Messung eines Kanalnutzungswertes (Channel Utilization Metric), AP_CHAN_UTIL, von einem Zugangspunkt, AP, zu empfangen, wobei es sich bei dem AP_CHAN_UTIL um einen zeitlichen Prozentsatz handelt, wie oft der Kanal von dem AP als belegt registriert wird; und
einen Prozessor, der dafür konfiguriert ist, die Kanalnutzung der STA, STA_CHAN_UTIL, zu ermitteln, wobei es sich um einen zeitlichen Prozentsatz handelt, wie oft der Kanal von der STA als belegt registriert wird,
**dadurch gekennzeichnet, dass** der Prozessor ferner für das Folgende konfiguriert ist:
Ermitteln der Interferenz einer Funkfrequenz, RF, durch Vergleichen von STA_CHAN_UTIL mit AP_CHAN_UTIL.

6. STA nach Anspruch 5, wobei der Prozessor dafür konfiguriert ist, zu ermitteln, dass die STA unter der Bedingung, dass STA_CHAN_UTIL größer als AP_ CHAN_UTIL ist, eine höhere RF-Interferenz als der AP aufweist.

7. STA nach Anspruch 5, wobei der Prozessor dafür konfiguriert ist, zu ermitteln, dass der AP unter der Bedingung, dass STA_CHAN_UTIL kleiner als AP_CHAN_UTIL ist, eine höhere RF-Interferenz als die STA aufweist.

8. STA nach Anspruch 5, wobei der Prozessor konfiguriert ist, die RF-Interferenz durch Vergleichen eines Verhältnisses von STA_CHAN_UTIL zu AP_CHAN_UTIL zu ermitteln.

9. Drahtlose Station, STA, welche das Folgende umfasst:
einen Empfänger, der dafür konfiguriert ist, einen Wert für die mittlere Zugangsverzögerung (Medium Access Delay Metric), AP_MAD, von einem Zugangspunkt, AP, zu empfangen, wobei es sich bei dem AP_MAD um eine durchschnittliche mittlere Zugangsverzögerung für den gesamten Verkehr auf der Abwärtsstrecke eines Grunddienstsatzes handelt; und
einen Prozessor, der dafür konfiguriert ist, einen Wert für die mittlere Zugangsverzögerung der STA, STA_MAD, zu ermitteln, wobei es sich eine durchschnittliche mittlere Zugangsverzögerung für den gesamten Verkehr auf der Aufwärtsstrecke der STA handelt,
**dadurch gekennzeichnet, dass** der Prozessor ferner für das Folgende konfiguriert ist:
Ermitteln der Interferenz einer Funkfrequenz, RF, durch Vergleichen von STA_MAD mit AP_MAD.

10. STA nach Anspruch 9, wobei der Prozessor dafür konfiguriert ist, zu ermitteln, dass die STA unter der Bedingung, dass STA_MAD größer als AP_MAD ist, eine höhere RF-Interferenz als der AP aufweist.

11. STA nach Anspruch 9, wobei der Prozessor dafür konfiguriert ist, zu ermitteln, dass der AP unter der Bedingung, dass STA_MAD kleiner als AP_MAD ist, eine höhere RF-Interferenz als die STA aufweist.

12. STA nach Anspruch 9, wobei der Prozessor konfiguriert ist, die RF-Interferenz durch Vergleichen eines Verhältnisses von STA_MAD zu AP_MAD zu ermitteln.

## Revendications

1. Station sans fil, STA, comprenant :
un récepteur configuré pour recevoir une mesure d'indicateur de puissance moyenne de bruit, AP_ANPI, d'un point d'accès, AP, dans laquelle l'AP_ANPI est déterminée en mesurant une puissance de canal inactif perçue par l'AP et en calculant sa moyenne dans le temps ; et
un processeur configuré pour déterminer un indicateur de puissance moyenne de bruit de la STA, STA_ANPI, en mesurant une puissance de canal inactif perçue par la STA et en calculant sa moyenne dans le temps,
**caractérisée en ce que** le processeur est en outre configuré pour :
déterminer l'interférence de radiofréquence, RF, en comparant le STA_ ANPI et l'AP_ANPI.

2. STA selon la revendication 1, dans laquelle le processeur est configuré pour déterminer que la STA subit une interférence RF supérieure à celle de l'AP à condition que le STA_ANPI soit supérieur à l'AP_ANPI.

3. STA selon la revendication 1, dans laquelle le processeur est configuré pour déterminer que l'AP subit une interférence RF supérieure à celle de la STA à condition que le STA_ANPI soit inférieur à l'AP_ANPI.

4. STA selon la revendication 1, dans laquelle le processeur est configuré pour déterminer l'interférence RF en comparant un rapport du STA_ANPI sur l'AP_ANPI.

5. Station sans fil, STA, comprenant :
un récepteur configuré pour recevoir une métrique d'utilisation de canal, AP_CHAN_UTIL, d'un point d'accès, AP, dans laquelle AP_CHAN_UTIL est un pourcentage du temps pendant lequel le canal est perçu comme étant occupé par l'AP ; et
un processeur configuré pour déterminer l'utilisation de canal de la STA, STA_CHAN_UTIL, qui est un pourcentage du temps pendant lequel le canal est perçu comme étant occupé par la STA,
**caractérisée en ce que** le processeur est en outre configuré pour :
déterminer l'interférence de radiofréquence, RF, en comparant la STA_CHAN_UTIL à l'AP_CHAN_UTIL.

6. STA selon la revendication 5, dans laquelle le processeur est configuré pour déterminer que la STA subit une interférence RF supérieure à celle de l'AP à condition que la STA_CHAN_UTIL soit supérieure à l'AP_CHAN_UTIL.

7. STA selon la revendication 5, dans laquelle le processeur est configuré pour déterminer que l'AP subit une interférence RF supérieure à celle de la STA à condition que la STA_CHAN_UTIL soit inférieure à l'AP_CHAN_UTIL.

8. STA selon la revendication 5, dans laquelle le processeur est configuré pour déterminer l'interférence RF en comparant un rapport de la STA_CHAN_UTIL sur l'AP_CHAN_UTIL.

9. Station sans fil, STA, comprenant :
un récepteur configuré pour recevoir une métrique de délai d'accès au support, AP_MAD, d'un point d'accès, AP, dans laquelle AP_MAD est un délai moyen d'accès au support pour tout le trafic de liaison descendante dans un ensemble de desserte de base ; et
un processeur configuré pour déterminer une métrique de délai d'accès au support de la STA, STA_MAD, qui est un délai moyen d'accès au support pour tout le trafic de liaison montante de la STA,
**caractérisée en ce que** le processeur est en outre configuré pour :
déterminer l'interférence de radiofréquence, RF, en comparant la STA_MAD à l'AP_MAD.

10. STA selon la revendication 9, dans laquelle le processeur est configuré pour déterminer que la STA subit une interférence RF supérieure à celle de l'AP à condition que la STA_MAD soit supérieure à l'AP_MAD.

11. STA selon la revendication 9, dans laquelle le processeur est configuré pour déterminer que l'AP subit une interférence RF supérieure à celle de la STA à condition que la STA_MAD soit inférieure à l'AP_MAD.

12. STA selon la revendication 9, dans laquelle le processeur est configuré pour déterminer l'interférence RF en comparant un rapport de la STA_MAD sur l'AP_MAD.
